# EUROPEAN PATENT APPLICATION

(11) **EP 4 742 378 A1**
(43) Date of publication of application: **13.05.2026**
(21) Application number: 25195166.1
(22) Date of filing: 11.08.2025
(51) Int. Cl.: H01M 50/103, H01M 50/105, H01M 10/04, H01M 50/289

(54) **BATTERY TAPE AND BATTERY TAPING METHOD**

(30) Priority: 07.11.2024 KR 20240156994
(71) Applicant: SAMSUNG SDI CO., LTD., Yongin-si, Gyeonggi-do 17084 (KR)
(72) Inventor: LEE, Wookjin, 17084 Yongin-Si (KR)
(74) Representative: Maiwald GmbH

(57) **Abstract**

The present disclosure provides a battery tape including a first member configured to be placed on a first surface of a battery, a pair of second members extending along a first direction from the first member and configured to be adhered to at least part of a second surface of the battery opposite to the first surface, and a pair of third members extending along a second direction from the first member perpendicular to the first direction, and configured to be adhered to at least part of the second surface, wherein one of the pair of second members includes a pull indication line adjacent to one end of the respective second member, and the pull indication line correspondingly overlaps a pull indication line of the other one of the pair of second members when the pair of second members are adhered to the second surface.

## Description

### FIELD

The present disclosure relates to a battery tape and a battery taping method.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure is aimed to provide a battery tape and a battery taping method to solve the herein-described problems.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

According to embodiments of the present disclosure, there is provided a battery tape including a first member configured to be placed on a first surface of a battery, a pair of second members extending along a first direction from the first member and configured to be adhered to at least part of a second surface of the battery opposite to the first surface, and a pair of third members extending along a second direction from the first member perpendicular to the first direction, and configured to be adhered to at least part of the second surface, wherein one of the pair of second members includes a pull indication line adjacent to one end of the respective second member, and the pull indication line correspondingly overlaps a pull indication line of the other one of the pair of second members when the pair of second members are adhered to the second surface.

Pull indication lines of the pair of second members may be formed on respective opposing side ends of the pair of second members extending along the second direction and may be configured to be broken by applying a tension to the pair of second members.

The pair of second members may be configured to be adhered to the second surface such that the pull indication lines intersect each other.

The pull indication lines may be formed on the pair of second members by a cutting line cut along in the second direction.

The pull indication lines may be formed on the pair of second members by a dotted line extending in the second direction.

A length of the pull indication lines may be formed to be 30% or more and/or 50% or smaller than a width of the second member in the second direction.

The first member includes a first base layer, the second member includes a second base layer extending in the first direction of the first base layer, and a second adhesive layer stacked on at least part of one surface of the second base layer, and the third member includes a third base layer extending in the second direction of the first base layer, and a third adhesive layer stacked on at least part of one surface of the third base layer.

The second adhesive layer may be configured to contact the second surface to adhere the second member to the second surface, and the third adhesive layer may be configured to contact the second surface to adhere the third member to the second surface.

The second member may include a second side surface area formed on one end adjacent to the first member and covering a side surface in the first direction of the battery, wherein the third member comprises a third side surface area formed on one end adjacent to the first member and covering a side surface in the second direction of the battery, and wherein the second side surface area and the third side surface area are formed as non-adhesive areas without an adhesive force.

At least one of the pair of second members may include at least one second corner area formed at a corner of the at least one of the pair of second members, at least one of the pair of third members includes a least one third corner area formed at a corner of the at least one of the pair of corner area, and the second corner area and the third corner area are formed as non-adhesive areas without an adhesive force.

According to embodiments of the present disclosure, there is provided a battery taping method, the method including providing a battery tape including a first member, a pair of second members and a pair of third members, placing the first member on a first surface of a battery, bending the pair of second members along side surfaces of the battery extending in a first direction of the battery, and applying a tension to the pair of second members in the first direction, overlapping and adhering the pair of second members on a second surface of the battery to allow a pull indication line formed on one of the pair of second members to overlap to a pull indication line formed on the other one of the pair of second members, and bending each of the pair of third members along a second side surface of the battery extending in a second direction perpendicular to the first direction of the battery, and adhering at least part of the third member onto the second surface of the battery.

The pull indication lines of the pair of second members may be formed on respective opposing side ends of the pair of second members extending along the second direction and are broken when the tension is applied.

The pull indication lines broken by applying the tension intersect each other and the pair of second members may be adhered to the second surface in the overlapping and adhering of the pair of second members.

The pull indication lines may be formed on the pair of second members as a cutting line cut along the second direction.

The pull indication lines may be formed on the pair of second members as a dotted line extending in the second direction.

A length of the pull indication lines may be formed to be 30% or more and/or 50% or smaller than a width of the second member in the second direction.

The first member may include a first base layer, wherein the second member includes a second base layer extending in the first direction of the first base layer, and a second adhesive layer stacked on at least part of one surface of the second base layer, and the third member includes a third base layer extending in the second direction of the first base layer, and a third adhesive layer stacked on at least part of one surface of the third base layer.

The second adhesive layer may contact the second surface and the second member contacts the second surface in the adhering of the second member, and the third adhesive layer contacts the second surface and the third member contacts the second surface in the adhering of the third member.

The second member may include a second side surface area formed on one end adjacent to the first member and covering a side surface in the first direction of the battery, wherein the third member includes a third side surface area formed on one end adjacent to the first member and covering a side surface in the second direction of the battery, and wherein the second side surface area and the third side surface area are formed as non-adhesive areas without an adhesive force.

At least one of the pair of second members may include at least one second corner area formed at a corner of the at least one of the pair of second members, at least one of the pair of third members includes at least one third corner area formed at a corner of the at least one of the pair of third members, and wherein the second corner area and the third corner area are formed as non-adhesive areas without an adhesive force.

According to embodiments of the present disclosure, a pair of second members overlaps each other to be attached to the battery to strengthen the adhesive force between the battery tape and the battery. Therefore, it is possible to minimize the likelihood of the battery detaching from the battery tape in situations such as a fall of the electronic device.

According to embodiments, the pull indication lines of the second members may intersect with each other and adhere to the battery, thereby enhancing the adhesive force between the battery tape and the battery. Therefore, this feature prevents the battery from moving, which ensures the stability of the battery.

According to embodiments, by forming non-adhesive areas on the entire area of the first member and a portion of the third member, issues such as a sealing phenomenon for twisting or difficulty in dismantling the battery tape may be resolved.

According to embodiment, non-adhesive areas are formed along the edge of the second member to prevent problems such as tape detachment from the battery during electronic device drops, while enhancing the ease of battery disassembly. As a result, users may easily detach the battery tape.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a schematic view illustrating a battery tape according to embodiments of the present disclosure.
FIG. 2 is a view illustrating a battery tape and a battery viewed from a D1 direction of FIG. 1 according to embodiments of the present disclosure.
FIG. 3 is a plan view illustrating a battery with a battery tape attached according to embodiments of the present disclosure.
FIG. 4 is a plan view illustrating a battery to which a battery tape is attached according to embodiments of the present disclosure.
FIG. 5 is a view illustrating a second member of a battery tape.
FIG. 6 is a view illustrating another example of a pull indication line of a second member according to embodiments of the present disclosure.
FIG. 7 is a perspective view illustrating a state before a battery is arranged in a battery tape according to embodiments of the present disclosure.
FIG. 8 is a view illustrating that a first surface of the battery is placed on the battery tape according to embodiments of the present disclosure.
FIG. 9 is a view illustrating that a tension is applied to a second member according to embodiments of the present disclosure.
FIG. 10 is a view illustrating a tension is applied to a second member to which another example of a pull indication line is applied according to embodiments of the present disclosure.
FIG. 11 is a plan view illustrating a state before pull indication lines of the battery tape intersect each other according to embodiments of the present disclosure.
FIG. 12 is a view illustrating a battery tape according to embodiments of the present disclosure.
FIG. 13 is a cross-sectional view illustrating a battery tape taken along line A-A of FIG. 12 according to embodiments of the present disclosure.
FIG. 14 is a cross-sectional view illustrating a battery tape taken along line B-B of FIG. 12 according to embodiments of the present disclosure.
FIG. 15 is a view illustrating non-adhesive areas of a battery tape according to embodiments of the present disclosure.
FIG. 16 is a flowchart illustrating an example of a battery taping method according to embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure.

Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

A battery used in a portable small electronic device is detached from the electronic device and replaced as needed. A battery tape is attached to the battery to separate the battery from the electronic device. Therefore, it is required that users be able to easily move the battery from the electronic device by pulling the battery tape, while enforcing the adhesive force of the battery tape to the battery to ensure the battery remains attached even when the device is dropped.

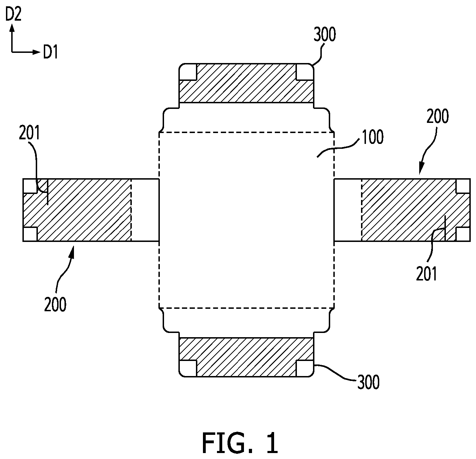

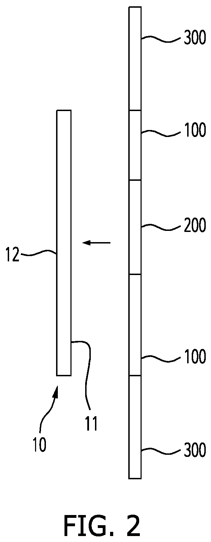

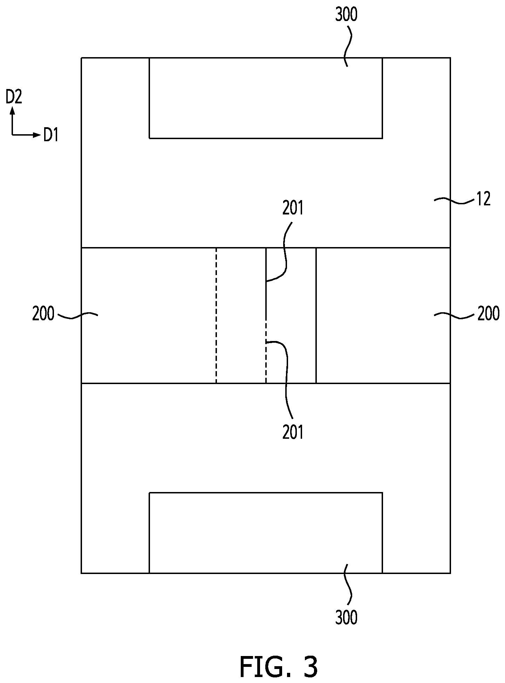

FIG. 1 is a schematic view illustrating a battery tape according to embodiments of the present disclosure, FIG. 2 is a view illustrating a battery tape and a battery viewed from a D1 direction of FIG. 1 according to embodiments of the present disclosure, and FIG. 3 is a plan view illustrating a battery with a battery tape attached according to embodiments of the present disclosure.

Referring to FIG. 1 to FIG. 3, a battery tape according to embodiments may include a first member 100, a second member 200, and a third member 300. For example, the first member 100 may be placed on a first surface 11 of a battery 10. The first member 100 may be formed in a rectangular (e.g., square) shape. The first member 100 may be formed to correspond to the shape and size of the first surface 11. For example, the first member 100 may be formed in the shape and size that covers the entire area of the first surface 11 of the battery 10.

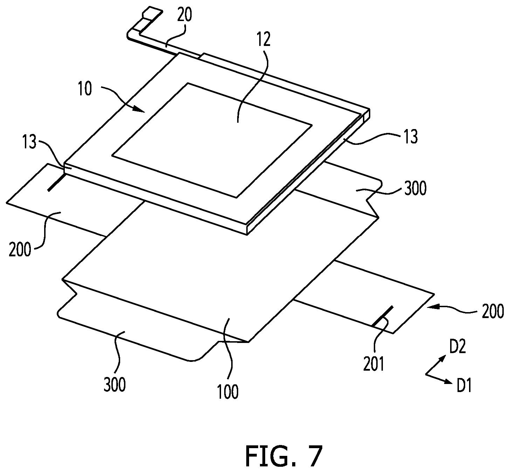

The first surface 11 of the battery 10 may be a lower surface (e.g., the lower surface of a battery 10 in FIG. 7) of the battery 10, but it is not limited thereto. The battery 10 may be placed on the first member 100 when the first surface 11 of the battery 10 faces the first member 100.

A second member 200 may be formed extending toward a first direction D1 of the first member 100. The second member 200 may be adhered to at least part of a second surface 12 facing the first surface 11 of the battery 10. The second member 200 may include a pair of second members that extend along the first direction D1 of the first member 100.

The second member 200 may extend from the side portion of the first member 100 to cover the side surface of the battery 10. The first surface 11 of the battery 10 may face the second surface 12, and the side surface of the battery 10 may be a surface that connects the first surface 11 and the second surface 12. The second member 200 may be bent along the side surface of the battery 10 to be partially adhered to the second surface 12 of the battery 10.

The shape of the second member 200 may vary depending on the desired design, and as an example, the shape may be a rectangular form (e.g., square) as shown in FIG. 1. However, it is not limited thereto, but selectively determined based on the desired design by those skilled in the art.

The second member 200 may extend from the first direction D1 of the first member 100 to cover two of side surfaces of the battery 10. The second member 200 may be adhered to the second surface 12 of the battery 10. An adhesive may be applied on at least one surface of the second member 200 to facilitate adhesion of the second member.

An adhesive may be applied to at least part of the second member 200 to be adhered to the second surface 12 of the battery 10. The second member 200 may be adhered to at least part of the second surface 12 of the battery 10. In this case, the second surface 12 of the battery 10 may be an upper surface of the battery 10, but it is not limited thereto.

The second member 200 may extend from the side portion of the first member 100, and the second member 200 may be adhered to at least part of the second surface 12 of the battery 10, so that the bonding between the battery tape and the battery 10 may be increased.

The battery 10 may supply a power to at least one of the components of an electronic device. For example, the battery 10 may include a non-rechargeable first battery, a rechargeable second battery, and/or a fuel cell, etc. The battery 10 may be placed to be detachable from the electronic device when the battery 10 is replaced.

According to embodiments, each of a pair of second members 200 may include a pull indication line 201 adjacent to one end of the respective second member. The pairs of second members 200 may overlap each other, so that the pull indication line 201 of one of the second members 200 may correspond a pull indication line 201 of the other of the second members 200 to be adhered to the second surface 12. For example, the second member 200 may include the pull indication line 201 adjacent to one end and formed in a second direction D2. The pair of second members 200 may overlap each other so that the pull indication lines 201 may be aligned in the second direction D2 to be adhered to the second surface 12.

The pair of second members 200 may overlap each other to be adhered in the second surface 12, which allows a battery tape to be strongly bonded to the battery 10. While one of the second member 200 may be adhered onto the second surface 12, the other one of the second member 200 may be layered and overlapped on the top of one of the second member 200 adhered to the second surface 12 to form an adhesive bond.

The pair of second members 200 may overlap each other to be adhered to the second surface 12 so that the pull indication line 201 of one of the second members 200 may correspond to the pull indication line 201 of the other one of the second members 200. Therefore, the battery 10 may be firmly fixed onto the battery tape.

According to embodiments, a third member 300 may be formed by extending along the second direction D2 perpendicular to the first direction D1 of the first member 100. The third member 300 may overlap at least part of the second surface 12. A pair of third members 300 may extend toward both directions along the second direction D2 of the first member 100. The third member 300 may extend from both sides in the second direction D2 of the first member 100 to cover two of the side surfaces of the battery 10. The third member 300 may be adhered to the second surface 12 of the battery 10, which is opposite the first surface 11 of the battery 10. An adhesive may be applied on at least one surface of the third member 300 to facilitate adhesion of the third member 300. The third member 300 may be bent along the side surface of the battery 10 to be partially adhered to the second surface 12 of the battery 10.

The battery tape may include a first member 100 facing the first surface 11 without an adhesive force, and the second member 200 and the third member 300 with an adhesive force. The adhesive may not be applied to the first member 100, thereby preventing noises that occur due to the bonding between the first surface 11 of the battery 10 the first member 100.

A film-type battery tape may include one surface with an adhesive force, and the other surfaces without an adhesive force. Therefore, the battery tape may be bonded by the adhesive force in the second member 200 and the third member 300. However, the adhesive surface may be formed on both sides of the battery tape, and the present disclosure is not limited thereto.

Therefore, the battery tape according to embodiments of the present disclosure may prevent the battery 10 to be detached in cases such as dropping of the electronic device, and minimize the noise occurrence on the battery tape attached area.

The third member 300 may have various shapes. The third member 300 may include two of the third members 300 respectively extending from both side portions of the first battery 10, and the third members 300 may not overlap each other when adhered to the second surface 12 of the battery 10. For example, the third member 300 may include a plurality of rounded corners where a width becomes narrower along the third member 300 away from the side portion of the first member 100. However, the shape of the third member 300 is not limited thereto.

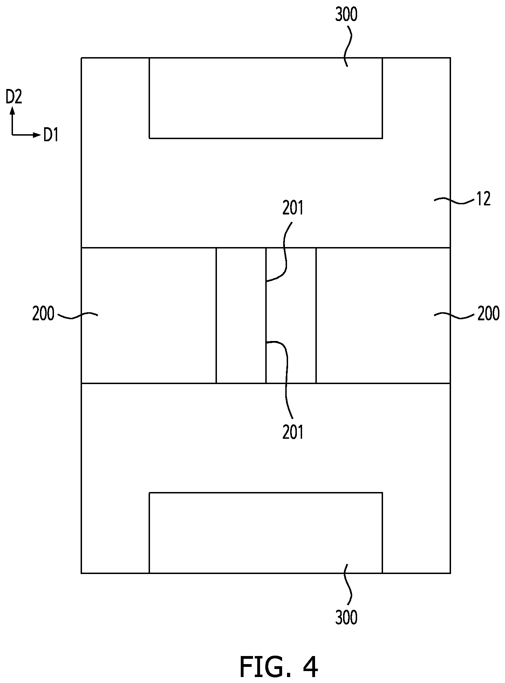

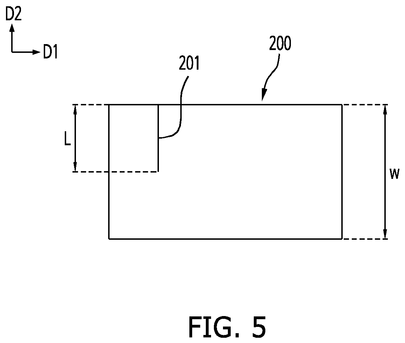

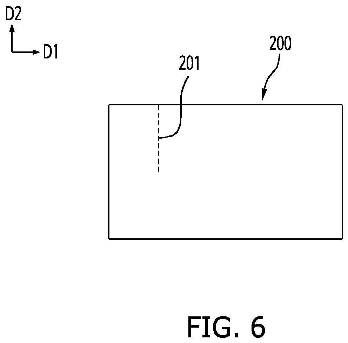

FIG. 4 is a plan view illustrating a battery to which a battery tape is attached according to embodiments of the present disclosure, FIG. 5 is a view illustrating a second member of a battery tape according to embodiments of the present disclosure, and FIG. 6 is a view illustrating another example of a pull indication line of a second member according to embodiments of the present disclosure.

Referring to FIG. 4 to FIG. 6, the pull indication lines 201 may be formed on side ends opposite to each other along the second direction D2 of the pair of second members 200. For example, the pull indication lines 201 may be configured to break when a tension is applied.

According to embodiments, the second member 200 may be adhered to the second surface 12 when the pull indication lines 201 broken by applying a tension intersect each other. For example, the pull indication lines 201 may be formed of a cutting line taken along the second direction D2 (example of FIG. 5). For another example, the pull indication lines 201 may be formed of as a dotted line extending along the second direction D2 (example of FIG. 6).

The second members 200 may be adhered onto the second surface 12 of the battery while intersecting each other with the pull indication lines 201 broken by applying a tension. The force that fixes the second surface 12 by the second member may be increased, and the bonding between the battery tape and the battery may be strengthened.

According to embodiments, a length L of the pull indication line 201 may be formed to be 30% or more and/or 50% or smaller than a width W of the second member 200 in the second direction D2. The length L of the pull indication line 201 may be a length that allows the pair of second members 200 to intersect each other. When the length L of the pull indication line 201 is formed to be 30% or smaller, the contact area between the second members 200 intersecting each other may be reduced, and when the length L of the pull indication line 201 is formed to be 50% or more, and a tension is applied to the second members 200, the second members 200 may be torn apart.

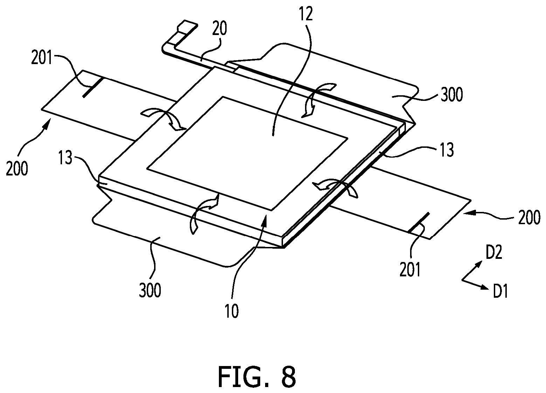

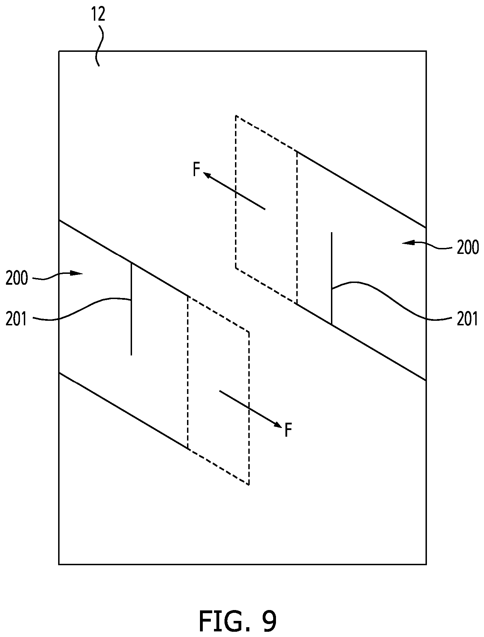

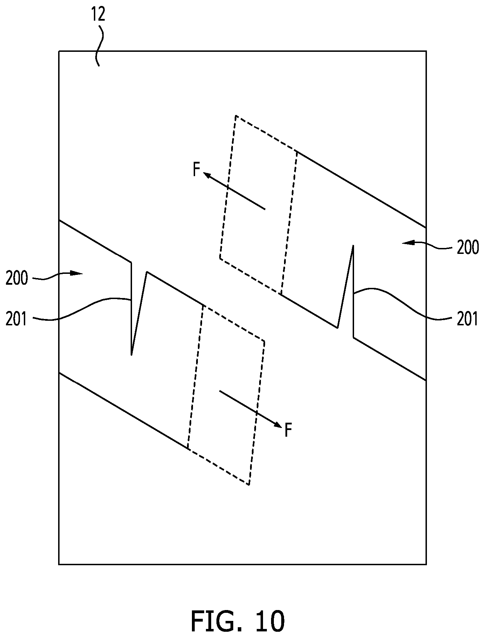

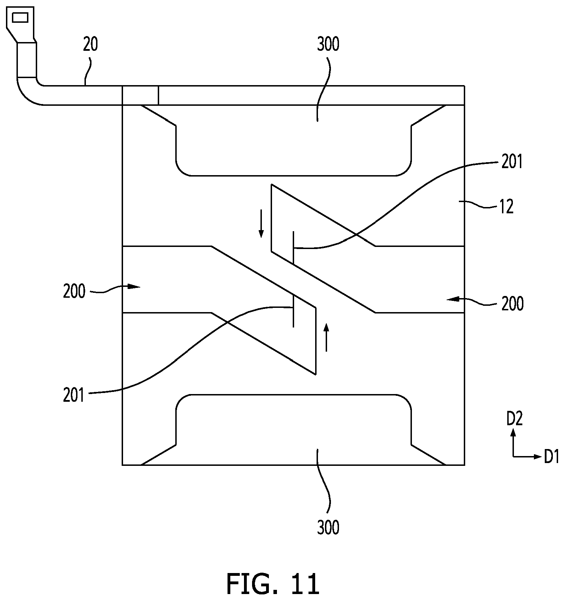

FIG. 7 is a perspective view illustrating a state before when a battery is arranged in a battery tape according to embodiments of the present disclosure, FIG. 8 is a view illustrating that a first surface of the battery is placed on the battery tape according to embodiments of the present disclosure, FIG. 9 is a view illustrating that a tension is applied to a second member according to embodiments of the present disclosure, FIG. 10 is a view illustrating a tension is applied to a second member to which another example of a pull indication line is applied according to embodiments of the present disclosure, and FIG. 11 is a plan view illustrating a state before pull indication lines of the battery tape intersect each other according to embodiments of the present disclosure.

Referring to FIG. 7 to FIG. 11, a battery tape according to embodiments may apply a tension to the second member 200 when the battery 10 is placed on the first member 100 to allow the pull indication lines formed on respective end portions of the pair of second members 200 to overlap each other to attach the second member 200 onto the second surface 12, and the third member 300 onto the second surface 12 to fix the battery 10.

The second member 200 and the third member 300 may be attached to the second surface 12 of the battery 10 by covering a side surface 13 of the battery after the first member 100 is disposed on a first surface of the battery 10.

The second member 200 may be folded toward the side surface 13 of the battery 10. For example, when the pair of second members 200 are folded when the battery 10 is placed on the first member 100, the pair of second members 200 may overlap each other. When the second member 200 is folded in a state where the battery 10 is placed on the second member 200, the second member 200 may be adhered to the second surface 12 by covering the side surface 13 of the battery 10. An adhesive may not be applied on a portion where the second member 200 covers the side surface 13 of the battery 10.

The third member 300 may be folded toward the side surface 13 of the battery 10. For example, when two of the third members 300 are folded in a state where the battery 10 is placed on the first member 100, as shown in FIG. 11, the third members 300 may not overlap each other. When the third member 300 is folded in a state where the battery 10 is placed on the first member 100, the third member 300 may be adhered to the second surface 12 by covering the side surface 13 of the battery 10. The adhesive may not be applied to a portion where the third member 300 covers the side surface 13 of the battery 10.

The second member 200 may extend from the side portion of the first member 100 to cover the side surface 13 of the battery 10. The second member 200 may be bent along the side surface 13 of the battery 10 to be partially adhered to the second surface 12 of the battery 10. The second members 200 may extend from two of side portions of the first member 100 to cover two of side surfaces 13 of the battery 10. The second member 200 may be adhered to the second surface 12 of the battery 10, which is opposite the first surface of the battery 10.

When a tension is applied to attach the second member 200 onto the second surface 12, for example, by pulling the second member 200 represented by dotted areas in FIG. 9, the respective second members 200 may overlap each other with the pull indication lines 201 corresponding to each other. For example, after a tension is applied to allow the pull indication lines 201 to be broken as shown in FIG. 10 and FIG. 11, the broken pull indication lines 201 may be overlapped to intersect each other in the second direction D2.

The third member 300 may extend from the side portion of the first member 100 to cover the side surface 13 of the battery 10. The third member 300 may be bent along the side surface 13 of the battery 10 to be partially adhered to the second surface 12 of the battery 10. The third member 300 may be a pair of third members 300 which extend from respective two side portions of the first member 100 to cover two of side surfaces 13 of the battery 10. The third member 300 may be adhered to the second surface 12 of the battery 10, which is opposite the first surface of the battery 10.

For example, the side surfaces 13 of the battery 10 may be in close contact with the first surface and the second surface 12. The first surface 11 may be a lower surface of the battery 10, and the second surface 12 may be an upper surface of the battery 10 opposite the first surface 11. When the battery 10 has a cube shape, the side surface 13 of the battery 10 may include a third surface, a fourth surface, a fifth surface, and a sixth surface adjacent to the first surface and the second surface 12. The third surface may face the fifth surface, and the fourth surface may face the sixth surface. In this case, the second member 200 and the third member 300 may cover the third, fourth, fifth, and sixth surfaces of the battery 10 to be adhered to a portion of the second surface 12.

According to embodiments, a protection circuit module 20 may be mounted on one side surface 13 of the battery, and the third member 300 may be adhered to at least part of the second surface 12 of the battery 10 while covering the protection circuit module 20. The protection circuit module (PCM) may be connected to the battery 10 by welding or soldering via a conductive nickel plate. The protection circuit module 20 may be connected to the lid of the battery 10 by a spot welding or a soldering.

The protection circuit module 20 may be electrically connected to the battery 10 and prevent overheating and explosion caused by overcharge, overdischarge and/or overcurrent of the battery 10. The protection circuit module 20 may include safety elements made of passive elements such as a resistor and a capacitor and/or active elements such as a field-effect transistor, or protection circuit elements in which integrated circuits are selectively formed.

The protection circuit module 20 may be placed on the side surface 13 of the battery 10. The protection circuit module 20 may include a flexible printed circuit board. The flexible printed circuit board may have a bent shape. The flexible printed circuit board may include a connector connected to an external device on one surface of an extraction part extracted from one side. The protection circuit module 20 may be connected to the external device through the connector. The protection circuit module 20 may transmit electrical energy stored in the battery 10 to the external device, or receive a control signal that controls the operation of the battery 10 from the external device.

When protection circuit module 20 is in contact with the one side surface 13 of the battery 10, the third member 300 may cover the side surface 13 of the battery 10 including the protection circuit module 20. Therefore, the protection circuit module 20 may be stably mounted on the side surface 13 of the battery 10.

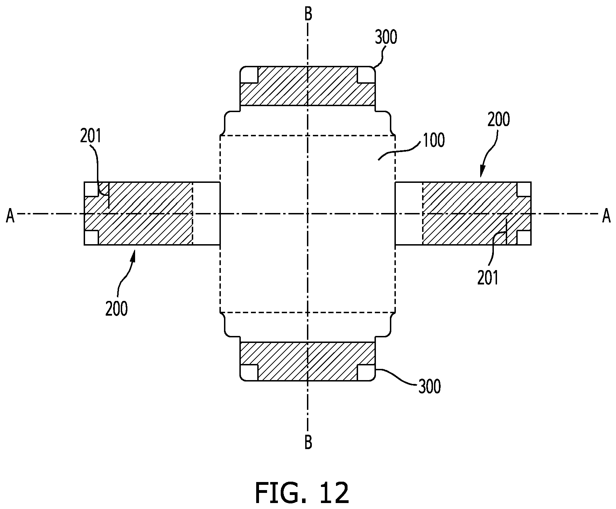

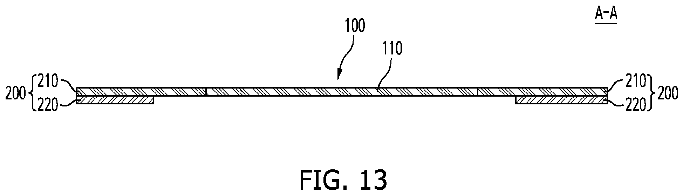

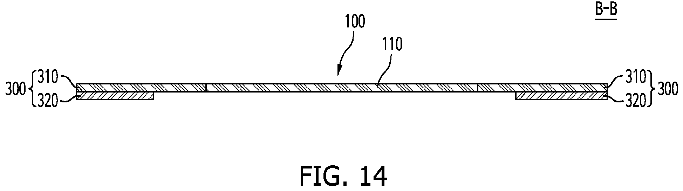

FIG. 12 is a view illustrating a battery tape according to embodiments, FIG. 13 is a cross-sectional view illustrating a battery tape taken along line A-A of FIG. 12, according to embodiments, and FIG. 14 is a cross-sectional view illustrating a battery tape taken along line B-B of FIG. 12 according to embodiments.

Referring to FIG. 12 to FIG. 14, the first member 100 may include a first base layer 110. The second member 200 may include a second base layer 210 extending along the first direction D1 of the first base layer 110, and a second adhesive layer 220 stacked on at least part of one surface of the second base layer 210. The third member 300 may include a third base layer 310 extending along the second direction D2 of the first base layer 110, and a third adhesive layer 320 stacked on at least part of one surface of the third base layer 310.

The first base layer 110, the second base layer 210 and the third base layer 310 may be formed without an adhesive layer. The second adhesive layer 220 may contact a second surface of the battery so that the second member 200 contacts the second surface, and the third adhesive layer 320 may contact the second surface to allow the third member 300 to be adhered to the second surface.

The second adhesive layer 220 and the third adhesive layer 320 may be made of any one of commonly used adhesives without limitation. The second adhesive layer 220 may be formed by applying an acrylic adhesive onto the second base layer 210. The third adhesive layer 320 may be formed by applying an acrylic adhesive to the third base layer 310. The acrylic adhesive may be selected from poly methyl methacrylate (PMMA), poly ethyl methacrylate (PEMA), or poly butyl methacrylate (PBMA).

The second adhesive layer 220 and the third adhesive layer 320 may be formed in various thicknesses by various publicly-known methods. For example, the second adhesive layer 220 may be coated by 2% to 16% of the entire thickness of the second member 200. The second adhesive layer 220 may be coated by 4% to 14% of the entire thickness of the second member 200. For example, the second adhesive layer 220 may be coated by 6% to 12% of the entire thickness of the second member 200.

The second adhesive layer 220 may be formed on a partial surface of the second base layer 210. The second adhesive layer 220 may be formed only on the second base layer 210 of the portion where the second member 200 is bent along the side surface of the battery to contact the second surface.

For example, the third adhesive layer 320 may be coated by 2% to 16% of the entire thickness of the third member 300. The third adhesive layer 320 may be coated by 4% to 14% of the entire thickness of the second member 200. For example, the third adhesive layer 320 may be coated by 6% to 12% of the entire thickness of the third member 300.

The third adhesive layer 320 may be formed on a partial surface of the third base layer 310. The third adhesive layer 320 may be formed only on the third base layer 310 of the portion where the third member 300 is bent along the side surface of the battery to contact the second surface.

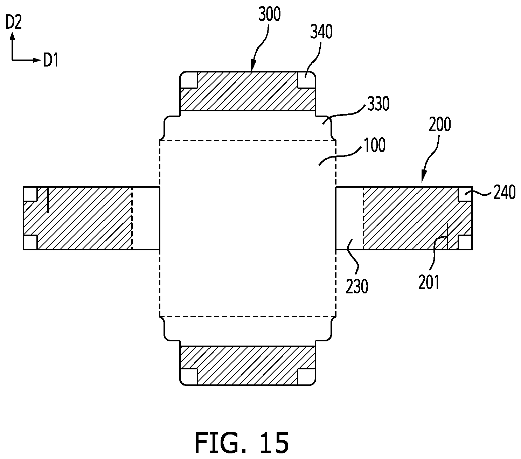

FIG. 15 is a view illustrating non-adhesive areas of a battery tape according to embodiments of the present disclosure.

Referring to FIG. 15, the second member 200 and the third member 300 may include non-adhesive areas without an adhesive force. The second member 200 may be formed on one end adjacent to the first member 100, and may include a second side surface area 230 that covers the side surface in the first direction D1 of the battery. The third member 300 may be formed on one end adjacent to the first member 100, and may include a third side surface area 330 that covers the side surface in the second direction D2 of the battery. The second side surface area 230 and the third side surface area 330 may be formed as non-adhesive areas without an adhesive force.

The second side surface 230 and the third side surface area 330 may be formed as non-adhesive areas without an adhesive force to prevent the occurrence of bonding of the battery tape. When the battery and the battery tape are adhered to each other, noises may occur due to the slight detachment, but the noises may be prevented because the second side surface 230 and the third side surface area 330 includes non-adhesive areas without an adhesive force.

For example, the second side surface area 230 of the battery tape corresponding to the side surface in the first direction D1 of the battery may be formed as a non-adhesive area to prevent the noises that occur between the battery and the side surface in the first direction D1 of the battery. Similarly, the third side surface area 330 of the battery tape corresponding to the side surface in the second direction D2 of the battery may be formed as a non-adhesive area to prevent the noises that occur between the battery and the side surface of the battery.

Therefore, noises that occur between the battery tape and the battery may be minimized by the second member 200 and the third member 300 including non-adhesive areas without an adhesive force.

The second member 200 may include at least one second corner area 240 formed at the corner of the second member 200. The third member 300 may include at least one third corner area 340 formed at the corner of the third member 300. The second corner area 240 and the third corner area 340 may be formed as non-adhesive areas without an adhesive force.

For example, the second corner area 240 may be formed in a rectangular shape on at least one of four corners of the second member 200. For example, as shown in FIG. 15, the second corner area 240 may be formed on two opposing corners opposite a side of the second member coupled to the first member 100 among the four corners of the second member 200.

For example, the third corner area 340 may be formed on at least one of four corners of the third member 300 in a curved shape. For example, as shown in FIG. 15, the third corner area 340 may be formed on two opposing corner areas opposite a side of the third member coupled to the first member 100 among four corners of the third member 300. However, the the positions where the second corner area 240 and the third corner area 340 are formed are not limited thereto, but the positions may vary as needed.

According to embodiments, a battery tape, when attached to a battery, may be bonded to an electronic device with the battery. The battery may be separated from the electronic device by pulling at least part of the battery tape attached to the battery to detach the battery from the electronic device.

The second corner area 240 and the third corner area 340 may be provided for a user to easily separate the battery tape from the battery. The second corner area 240 and the third corner area 340 may be pulled by a user's hands, and used for detaching the battery from the electronic device. Therefore, the user may easily separate the battery tape from the tape.

For example, the area of the second corner area 240 may be 5% to 20% of the entire area of the second member 200. In some embodiments, the area of the third corner area 340 may be 5% to 20% of the entire area of the third member 300. However, the present disclosure is not limited thereto, but the non-adhesive area may have various areas as long as the battery is stably attached and fixed. The area of the second corner area 240 and the area of the third corner area 340 are not limited as long as the user easily detaches the battery tape from the battery.

According to embodiments, the shapes of the second corner area 240 and the third corner area 340 may be a square shape. The shapes of the second corner area 240 and the third corner area 340 are not limited thereto, and the second corner area 240 may be formed as various polygonal shapes such as triangles, pentagons, and hexagons.

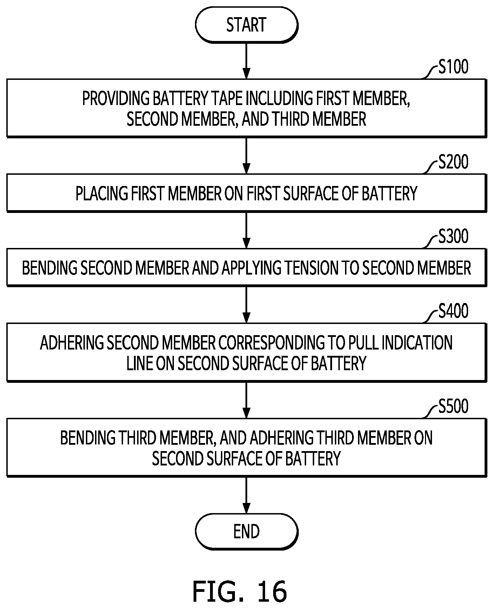

FIG. 16 is a flowchart illustrating an example of a battery taping method according to embodiments of the present disclosure.

According to embodiments, the battery taping method may include providing a battery tape in step S100, placing a first member on a first surface of the battery in step S200, applying a tension to a second member in step S300, attaching a second member onto a second surface of the battery in step S400, and attaching a third member onto a second surface of the battery in step S500. The step of attaching the third member onto the second surface of the battery in step S500 may be performed after the step of placing the first member in step S200.

The battery taping method may be initiated by providing a battery tape in step S100. The step of providing a battery tape in step S100 may include providing a battery tape including a first member, a pair of second members and a pair of third members.

The step of placing the first member in step S200 may include placing the first member onto the first surface. The battery may be placed on the first member while the first surface of the battery faces the first member in the step of placing the first member in step S200.

The step of applying a tension onto the second member in step S300 may include bending a second member along the side surface of the battery in the first direction, and applying a tension to the second member in the first direction. The step of attaching the second member onto the second surface of the battery in step S400 may be performed following the step of applying a tension to the second member in step S300.

The step of attaching the second member in step S400 may include overlapping and attaching a pair of second members onto the second surface of the battery so that the pull indication line formed on one of the pair of second members corresponds to the pull indication line formed on the other one of the pair of second members. The pull indication lines may be formed on side end portions opposite to each other in the second direction of the pair of second members and broken in the step of applying a tension in step S300.

In the step of overlapping and attaching the pair of second members in step S400, the pair of second members are attached to the second surface when the pull indication lines, broken by applying a tension, intersect each other. The pull indication lines may be formed as a cutting line cut in the second direction. The pull indication lines may be formed of a dotted line extending in the second direction. For example, the length of the pull indication line may be formed to be 30% or more and/or 50% or smaller than the width of the second member in the second direction.

The step of attaching the third member onto the second surface of the battery in step S500 may be performed after the step of attaching the second member in step S400. The step of attaching the third member onto the second surface in step S500 may include bending each of the pair of third members along the side surface in the second direction perpendicular to the first direction of the battery, and attaching at least part of the third member onto the second surface.

The first member of the battery tape may include a first base layer, the second member may include a second base layer extending in the first direction of the first base layer, and a second adhesive layer stacked on at least part of one surface of the second base layer, and the third member may include a third base layer extending in the second direction of the first base layer, and a third adhesive layer stacked on at least part of one surface of the third base layer.

The step of attaching the second member in step S400 may include attaching the second member onto the second surface when the second adhesive layer contacts the second surface, and the step of attaching the third member in step S500 may include attaching the third member onto the second surface when the third adhesive layer contacts the second surface.

The flow chart of FIG. 16 and the herein description are merely exemplary, and the scope of the present disclosure is not limited to the flow chart of FIG. 16 and the herein description. For example, one or more steps in the flow chart and the herein description may be added/changed/deleted, the orders of one or more steps may be changed, and one or more steps may be performed simultaneously.

## Claims

1. A battery tape, comprising:
a first member (100) configured to be placed on a first surface (11) of a battery (10);
a pair of second members (200) extending along a first direction (D1) from the first member (100) and configured to be adhered to at least part of a second surface (12) of the battery (10) opposite to the first surface (11); and
a pair of third members (300) extending along a second direction (D2) from the first member (100) perpendicular to the first direction (D1), and configured to be adhered to at least part of the second surface (12), wherein one of the pair of second members (200) includes a pull indication line (201) adjacent to one end of the respective second member (200), and the pull indication line (201) correspondingly overlaps a pull indication line (201) of the other one of the pair of second members (200) when the pair of second members (200) are adhered to the second surface (12).

2. The battery tape as claimed in claim 1, wherein the pull indication lines (201) of the pair of second members (200) are formed on respective opposing side ends of the pair of second members (200) extending along the second direction (D2) and are configured to be broken by applying a tension to the pair of second members (200).

3. The battery tape as claimed in claim 1 or 2, wherein the pair of second members (200) are configured to be adhered to the second surface (12) such that the pull indication lines (201) intersect each other.

4. The battery tape as claimed in any one of the preceding claims, wherein the pull indication lines (201) are formed on the pair of second members (200) by a cutting line cut along in the second direction (D2).

5. The battery tape as claimed in any one of the preceding claims, wherein the pull indication lines (201) are formed on the pair of second members (200) by a dotted line extending in the second direction (D2).

6. The battery tape as claimed in any one of the preceding claims, wherein a length of the pull indication lines (201) is formed to be 30% and/or more or 50% or smaller than a width of the second member (200) in the second direction (D2).

7. The battery tape as claimed in any one of the preceding claims, wherein:
the first member (100) includes a first base layer (110);
the second member (200) includes a second base layer (210) extending in the first direction (D1) of the first base layer (110), and a second adhesive layer (220) stacked on at least part of one surface of the second base layer (210); and
the third member (300) includes a third base layer (310) extending in the second direction (D2) of the first base layer (110), and a third adhesive layer (320) stacked on at least part of one surface of the third base layer (310).

8. The battery tape as claimed in claim 7, wherein the second adhesive layer (220) is configured to contact the second surface (12) to adhere the second member (200) to the second surface (12), and the third adhesive layer (320) is configured to contact the second surface (12) to adhere the third member (300) to the second surface (12).

9. The battery tape as claimed any one of the preceding claims, wherein:
the second member (200) includes a second side surface area (230) formed on one end adjacent to the first member (100) and covering a side surface in the first direction (D1) of the battery (10);
the third member (300) includes a third side surface area (330) formed on one end adjacent to the first member (100) and covering a side surface in the second direction (D2) of the battery (10); and
the second side surface area (230) and the third side surface area (330) are formed as non-adhesive areas without an adhesive force.

10. The battery tape as claimed in any one of the preceding claims, wherein:
at least one of the pair of second members (200) includes at least one second corner area (240) formed at a corner of the at least one of the pair of second members (200);
at least one of the pair of third members (300) includes a least one third corner area (340) formed at a corner of the at least one of the pair of third members (300); and
the second corner area (240) and the third corner area (340) are formed as non-adhesive areas without an adhesive force.

11. A battery taping method, the method comprising:
providing (S100) a battery tape including a first member (100), a pair of second members (200), and a pair of third members (300);
placing (S200) the first member (100) on a first surface (11) of a battery;
bending (S300) the pair of second members (200) along side surfaces of the battery (10) extending in a first direction (D1) of the battery (10), and applying a tension to the pair of second members (200) in the first direction (D1);
overlapping and adhering (S400) the pair of second members (200) on a second surface (12) of the battery (10) to allow a pull indication line (201) formed on one of the pair of second members (200) to overlap a pull indication line (201) formed on the other one of the pair of second members (200); and
bending (S500) each of the pair of third members (300) along second side surfaces of the battery (10) extending in a second direction (D2) perpendicular to the first direction (D1) of the battery (10); and
adhering at least part of the third member (300) onto the second surface (12) of the battery (10).

12. The method as claimed in claim 11, wherein the pull indication lines (201) of the pair of second members (200) are formed on respective opposing side ends of the pair of second members (200) extending along the second direction (D2) and are broken when the tension is applied.

13. The method as claimed in claim 11 or 12, wherein the pull indication lines (201) broken by applying the tension intersect each other and the pair of second members (200) are adhered to the second surface (12) in the overlapping and adhering of the pair of second members (200).

14. The method as claimed in any one of the claims 11 to 13, wherein:
the first member (100) includes a first base layer (110);
the second member (200) includes a second base layer (210) extending in the first direction (D1) of the first base layer (110), and a second adhesive layer (220) stacked on at least part of one surface of the second base layer (210); and
the third member (300) includes a third base layer (310) extending in the second direction (D2) of the first base layer (110), and a third adhesive layer (320) stacked on at least part of one surface of the third base layer (310).

15. The method as claimed in claim 14, wherein:
the second adhesive layer (220) contacts the second surface (12) and the second member (200) contacts the second surface (12) in the adhering of the second member (200); and
the third adhesive layer (320) contacts the second surface (12) and the third member (300) contacts the second surface (12) in the adhering of the third member (300).
